# EUROPEAN PATENT APPLICATION

(11) **EP 1 758 321 A1**
(43) Date of publication of application: **28.02.2007**
(21) Application number: 06119495.7
(22) Date of filing: 24.08.2006
(51) Int. Cl.: H04L 12/56, H04L 29/06

(54) **Method and apparatus for providing customer configurable quality of service settings of customer premise based equipment**

(30) Priority: 25.08.2005 US 211253
(71) Applicant: AT&T Corp., New York, NY 10013-2412 (US)
(72) Inventor: Croak, Marian, Fair Haven, NJ 07704 (US); Eslambolchi, Hossein, Los Altos Hills, CA 94022 (US)
(74) Representative: Asquith, Julian Peter

(57) **Abstract**

A method and apparatus for providing a method for precedence-based Quality of Service (QoS) to become a customer configurable parameter on network interfacing premise equipment, such as a Terminal Adapter (TA), a customer gateway or a customer router is disclosed. The invention enables customers to dynamically adjust the QoS level of voice traffic handling by premise based access equipment from an access perspective as a function of their specific requirements, e.g., on either a call by call basis, a time of day basis, or a day of the week basis.

## Description

The present invention relates generally to communication networks and, more particularly, to a method and apparatus for enabling customer configurable Quality of Service (QoS) settings of customer premise based equipment in communication networks, e.g. packet networks such as Voice over Internet Protocol (VoIP) networks.

### BACKGROUND OF THE INVENTION

Providers of packet network services, e.g., VoIP network services, strive to offer their customers service level agreements that guarantee a certain level of network reliability and voice quality. In order to meet these agreements, many providers ensure that the premise equipment that customers use to interface to the network provides precedence to voice versus data packets. This can sometimes lead to user dissatisfaction since some customers desire at times to prioritize their data communication above their real time voice traffic.

Therefore, a need exists for a method and apparatus for providing customer configurable Quality of Service settings of customer premise based equipment in a packet network, e.g., a VoIP network.

### SUMMARY OF THE INVENTION

In one embodiment, the present invention provides a method for precedence-based Quality of Service (QoS) to become a customer configurable parameter on network interfacing premise equipment, such as a Terminal Adapter (TA) or customer gateway or router. The present invention enables a customer or subscriber to dynamically adjust the QoS level of voice traffic handling by premise based access equipment from an access perspective as a function of their specific requirements, e.g., on either a call by call basis, a time of day basis, or a day of the week basis.

### BRIEF DESCRIPTION OF THE DRAWINGS

The teaching of the present invention can be readily understood by considering the following detailed description in conjunction with the accompanying drawings, in which:

FIG. 1 illustrates an exemplary Voice over Internet Protocol (VoIP) network related to the present invention;

FIG. 2 illustrates an example of enabling customer configurable Quality of Service settings of customer premise based equipment in a VoIP related to the present invention;

FIG. 3 illustrates a flowchart of a method for enabling customer configurable Quality of Service settings of customer premise based equipment in a VoIP of the present invention; and

FIG. 4 illustrates a high level block diagram of a general purpose computer suitable for use in performing the functions described herein.

To facilitate understanding, identical reference numerals have been used, where possible, to designate identical elements that are common to the figures.

### DETAILED DESCRIPTION

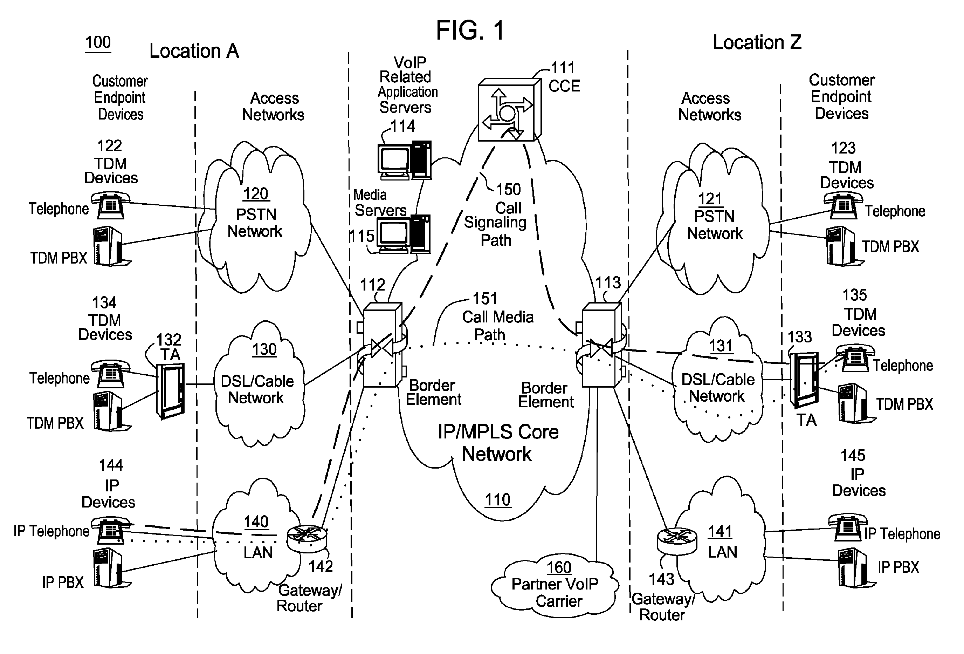

To better understand the present invention, FIG. 1 illustrates an example network, e.g., a packet network such as a VoIP network related to the present invention. Exemplary packet networks include internet protocol (IP) networks, asynchronous transfer mode (ATM) networks, frame-relay networks, and the like. An IP network is broadly defined as a network that uses Internet Protocol to exchange data packets. Thus, a VoIP network or a SoIP (Service over Internet Protocol) network is considered an IP network.

In one embodiment, the VoIP network may comprise various types of customer endpoint devices connected via various types of access networks to a carrier (a service provider) VoIP core infrastructure over an Internet Protocol/Multi-Protocol Label Switching (IP/MPLS) based core backbone network. Broadly defined, a VoIP network is a network that is capable of carrying voice signals as packetized data over an IP network. The present invention is described below in the context of an illustrative VoIP network. Thus, the present invention should not be interpreted to be limited by this particular illustrative architecture.

The customer endpoint devices can be either Time Division Multiplexing (TDM) based or IP based. TDM based customer endpoint devices 122, 123, 134, and 135 typically comprise of TDM phones or Private Branch Exchange (PBX). IP based customer endpoint devices 144 and 145 typically comprise IP phones or IP PBX. The Terminal Adaptors (TA) 132 and 133 are used to provide necessary interworking functions between TDM customer endpoint devices, such as analog phones, and packet based access network technologies, such as Digital Subscriber Loop (DSL) or Cable broadband access networks. TDM based customer endpoint devices access VoIP services by using either a Public Switched Telephone Network (PSTN) 120, 121 or a broadband access network 130, 131 via a TA 132 or 133. IP based customer endpoint devices access VoIP services by using a Local Area Network (LAN) 140 and 141 with a VoIP gateway or router 142 and 143, respectively.

The access networks can be either TDM or packet based. A TDM PSTN 120 or 121 is used to support TDM customer endpoint devices connected via traditional phone lines. A packet based access network, such as Frame Relay, ATM, Ethernet or IP, is used to support IP based customer endpoint devices via a customer LAN, e.g., 140 with a VoIP gateway and router 142. A packet based access network 130 or 131, such as DSL or Cable, when used together with a TA 132 or 133, is used to support TDM based customer endpoint devices.

The core VoIP infrastructure comprises of several key VoIP components, such as the Border Elements (BEs) 112 and 113, the Call Control Element (CCE) 111, VoIP related Application Servers (AS)114, and Media Server (MS) 115. The BE resides at the edge of the VoIP core infrastructure and interfaces with customers endpoints over various types of access networks. A BE is typically implemented as a Media Gateway and performs signaling, media control, security, and call admission control and related functions. The CCE resides within the VoIP infrastructure and is connected to the BEs using the Session Initiation Protocol (SIP) over the underlying IP/MPLS based core backbone network 110. The CCE is typically implemented as a Media Gateway Controller or a softswitch and performs network wide call control related functions as well as interacts with the appropriate VoIP service related servers when necessary. The CCE functions as a SIP back-to-back user agent and is a signaling endpoint for all call legs between all BEs and the CCE. The CCE may need to interact with various VoIP related Application Servers (AS) in order to complete a call that require certain service specific features, e.g. translation of an E.164 voice network address into an IP address and so on.

For calls that originate or terminate in a different carrier, they can be handled through the PSTN 120 and 121 or the Partner IP Carrier 160 interconnections. For originating or terminating TDM calls, they can be handled via existing PSTN interconnections to the other carrier. For originating or terminating VoIP calls, they can be handled via the Partner IP carrier interface 160 to the other carrier.

In order to illustrate how the different components operate to support a VoIP call, the following call scenario is used to illustrate how a VoIP call is setup between two customer endpoints. A customer using IP device 144 at location A places a call to another customer at location Z using TDM device 135. During the call setup, a setup signaling message is sent from IP device 144, through the LAN 140, the VoIP Gateway/Router 142, and the associated packet based access network, to BE 112. BE 112 will then send a setup signaling message, such as a SIP-INVITE message if SIP is used, to CCE 111. CCE 111 looks at the called party information and queries the necessary VoIP service related application server 114 to obtain the information to complete this call. In one embodiment, the Application Server (AS) functions as a back-to-back user agent. If BE 113 needs to be involved in completing the call; CCE 111 sends another call setup message, such as a SIP-INVITE message if SIP is used, to BE 113. Upon receiving the call setup message, BE 113 forwards the call setup message, via broadband network 131, to TA 133. TA 133 then identifies the appropriate TDM device 135 and rings that device. Once the call is accepted at location Z by the called party, a call acknowledgement signaling message, such as a SIP 200 OK response message if SIP is used, is sent in the reverse direction back to the CCE 111. After the CCE 111 receives the call acknowledgement message, it will then send a call acknowledgement signaling message, such as a SIP 200 OK response message if SIP is used, toward the calling party. In addition, the CCE 111 also provides the necessary information of the call to both BE 112 and BE 113 so that the call data exchange can proceed directly between BE 112 and BE 113. The call signaling path 150 and the call media path 151 are illustratively shown in FIG. 1. Note that the call signaling path and the call media path are different because once a call has been setup up between two endpoints, the CCE 111 does not need to be in the data path for actual direct data exchange.

Media Servers (MS) 115 are special servers that typically handle and terminate media streams, and to provide services such as announcements, bridges, transcoding, and Interactive Voice Response (IVR) messages for VoIP service applications.

Note that a customer in location A using any endpoint device type with its associated access network type can communicate with another customer in location Z using any endpoint device type with its associated network type as well. For instance, a customer at location A using IP customer endpoint device 144 with packet based access network 140 can call another customer at location Z using TDM endpoint device 123 with PSTN access network 121. The BEs 112 and 113 are responsible for the necessary signaling protocol translation, e.g., SS7 to and from SIP, and media format conversion, such as TDM voice format to and from IP based packet voice format.

Providers of packet network services, e.g., VoIP network services, strive to offer their customers service level agreements that guarantee a certain level of network reliability and voice quality. In order to meet these agreements, many providers ensure that the premise equipment that customers use to interface to the network provides precedence to voice versus data packets. This can sometimes lead to user dissatisfaction since some customers desire at times to prioritize their data communication above their real time voice traffic. If the voice traffic of a customer can be configured on a call by call, a time of day basis, or a day of the week basis, the problem can be avoided.

To address this need, in one embodiment the present invention provides a method for precedence-based Quality of Service (QoS) to become a customer configurable parameter on network interfacing premise equipment, such as a Terminal Adapter (TA), or a customer gateway or a customer router. The present invention enables a customer to dynamically adjust the QoS level of voice traffic handling by premise based access equipment from an access perspective as a function of their specific requirements, e.g., on either a call by call basis or a time of day basis or a day of the week basis.

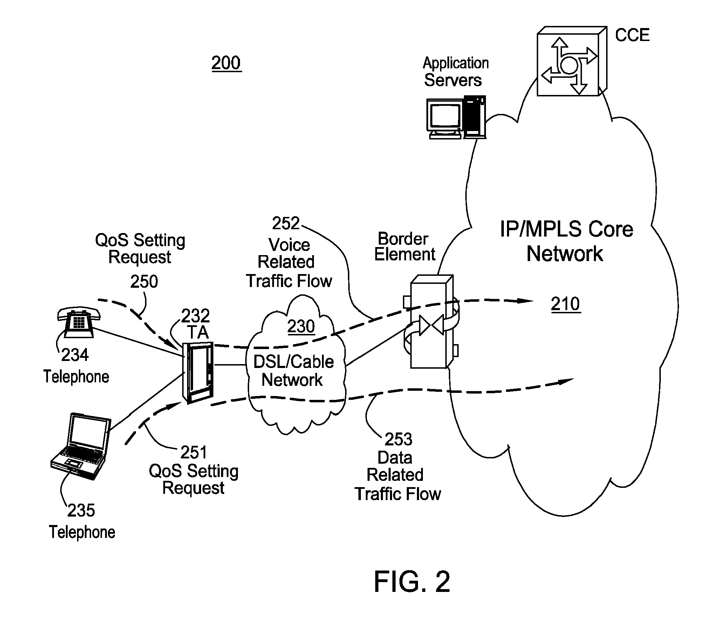

FIG. 2 illustrates an example of enabling customer configurable Quality of Service settings of customer premise based equipment in a packet network, e.g., a VoIP network, related to the present invention. In FIG. 2, a subscriber uses TA 232 to interface with the VoIP network 210. TA 232 supports QoS settings and has a network default setting for voice and data traffic associated QoS level. The network default QoS settings may, for instance, give voice traffic a higher priority than data traffic. The subscriber can modify the network default QoS settings using telephone 234 or Personal Computer (PC) 235. In one embodiment, a predefined Dual Tone Multiple Frequency (DTMF) signal can be entered via telephone 234 using flow 250 to modify the network default QoS settings. Alternatively, the network default QoS settings can also be modified via PC 235 using a web interface via flow 251. The QoS priority settings can provide voice traffic a higher queueing priority than, a lower queueing priority than, or equal queueing priority to data traffic. The customer configurable QoS settings can be set on a call by call basis, on a time of day basis, or a day of the week basis. When a call by call setting is used, the priority setting is only valid for one call and the default settings will be restored after the call is finished. When the time of day or day of week setting is used, the priority of voice traffic is modified based on the time of day or day of week priority profile configured and set by the subscriber. Flow 252 indicates the voice traffic flow and flow 253 indicates the data traffic flow originating from TA 232. The priority of flow 252 and 253 are determined based on the customer configuration QoS settings if used; otherwise, the network default QoS settings will be used. In one embodiment, the network default QoS settings are determined and configured by the network operator.

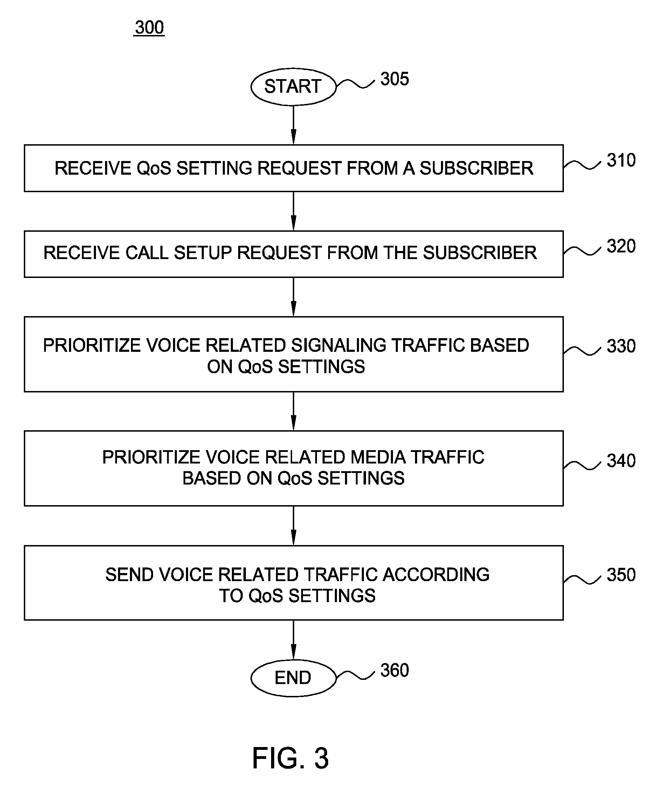

FIG. 3 illustrates a flowchart of a method 300 for providing customer configurable Quality of Service settings of customer premise based equipment in a VoIP of the present invention. Method 300 starts in step 305 and proceeds to step 310.

In step 310, the method receives a customer configurable QoS setting entered by a customer or subscriber, e.g., a modified QoS setting is generated. For example, the QoS settings for the customer premise based equipment, e.g., the TA, can be on a call by call basis, on a time of day basis, or on a day of the week basis as configured by the customer. When a call by call setting is used, the priority setting is only valid for one call and the default settings will be restored after the call is finished. When the time of day or day of the week setting is used, the priority of voice traffic is modified based on the time of day or the day of the week priority profile configured and set by the subscriber.

In step 320, the method receives a call setup message from the subscriber. For example, the network receives a call setup message from an endpoint device via the customer premise based equipment of the subscriber.

In step 330, the method prioritizes the voice related signaling traffic based on the customer configured QoS settings for the customer premise based equipment of the subscriber. In step 340, the method prioritizes the voice related media traffic based on the customer configured QoS settings for the customer premise based equipment of the subscriber. It should be noted that voice related traffic broadly comprises voice related signaling traffic and/or voice related media traffic.

In step 350, the method sends VoIP related traffic between the VoIP network and the customer premise based equipment of the subscriber according to the customer configured QoS settings. The method ends in step 360.

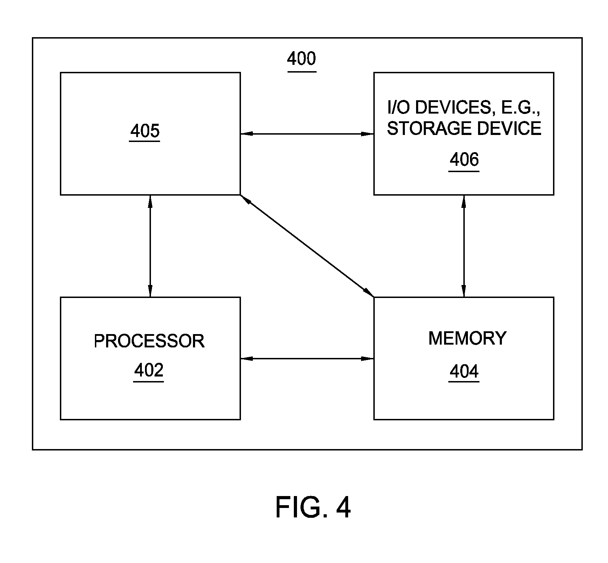

FIG. 4 depicts a high level block diagram of a general purpose computer suitable for use in performing the functions described herein. As depicted in FIG. 4, the system 400 comprises a processor element 402 (e.g., a CPU), a memory 404, e.g., random access memory (RAM) and/or read only memory (ROM), a customer configurable Quality of Service settings module 405, and various input/output devices 406 (e.g., storage devices, including but not limited to, a tape drive, a floppy drive, a hard disk drive or a compact disk drive, a receiver, a transmitter, a speaker, a display, a speech synthesizer, an output port, and a user input device (such as a keyboard, a keypad, a mouse, and the like)).

It should be noted that the present invention can be implemented in software and/or in a combination of software and hardware, e.g., using application specific integrated circuits (ASIC), a general purpose computer or any other hardware equivalents. In one embodiment, the present customer configurable Quality of Service settings module or process 405 can be loaded into memory 404 and executed by processor 402 to implement the functions as discussed above. As such, the present customer configurable Quality of Service settings process 405 (including associated data structures) of the present invention can be stored on a computer readable medium or carrier, e.g., RAM memory, magnetic or optical drive or diskette and the like.

While various embodiments have been described above, it should be understood that they have been presented by way of example only, and not limitation. Thus, the breadth and scope of a preferred embodiment should not be limited by any of the above-described exemplary embodiments, but should be defined only in accordance with the following claims and their equivalents.

## Claims

1. A method for providing a customer configurable Quality of Service (QoS) setting of customer premise based equipment in a communication network, comprising:
receiving a QoS setting request from a customer to modify a QoS setting for the customer premise based equipment, where said modifying creates a modified QoS setting; and
prioritizing a voice related traffic according to said modified QoS setting configured by said customer.

2. The method of claim 1, wherein said communication network is a Voice over Internet Protocol (VoIP) network or a Service over Internet Protocol (SoIP) network.

3. The method of claim 1, wherein said QoS setting request can be performed using a telephone interface or a web based user interface.

4. The method of claim 3, wherein said QoS setting request using a telephone interface is performed using a predefined Dual Tone Multiple Frequency (DTMF) signal.

5. The method of claim 1, wherein said modified QoS setting is effective for a call by call basis, a time of day basis, or a day of week basis.

6. The method of claim 1, wherein said modified QoS setting provides at least one of: providing said voice related traffic with a higher queueing priority than data traffic, providing said voice related traffic with a lower queueing priority than said data traffic, or providing said voice related traffic equal to a queueing priority of said data traffic.

7. The method of claim 1, wherein said voice related traffic comprises voice related signaling traffic and voice related media traffic.

8. The method of claim 1, wherein said QoS setting is based on a network default setting if said QoS setting request is not received from said customer.

9. The method of claim 1, wherein said customer premise equipment comprises at least one of: a Terminal Adaptor (TA), a customer gateway, or a customer router.

10. A computer-readable medium having stored thereon a plurality of instructions, the plurality of instructions including instructions which, when executed by a processor, cause the processor to perform the steps of a method for providing a customer configurable Quality of Service (QoS) setting of customer premise based equipment in a communication network, comprising:
receiving a QoS setting request from a customer to modify a QoS setting for the customer premise based equipment, where said modifying creates a modified QoS setting; and
prioritizing a voice related traffic according to said modified QoS setting configured by said customer.

11. The computer-readable medium of claim 10, wherein said communication network is a Voice over Internet Protocol (VoIP) network or a Service over Internet Protocol (SoIP) network.

12. The computer-readable medium of claim 10, wherein said QoS setting request can be performed using a telephone interface or a web based user interface.

13. The computer-readable medium of claim 12, wherein said QoS setting request using a telephone interface is performed using a predefined Dual Tone Multiple Frequency (DTMF) signal.

14. The computer-readable medium of claim 10, wherein said modified QoS setting is effective for a call by call basis, a time of day basis, or a day of week basis.

15. The computer-readable medium of claim 10, wherein said modified QoS setting provides at least one of: providing said voice related traffic with a higher queueing priority than data traffic, providing said voice related traffic with a lower queueing priority than said data traffic, or providing said voice related traffic equal to a queueing priority of said data traffic.

16. The computer-readable medium of claim 10, wherein said voice related traffic comprises voice related signaling traffic and voice related media traffic.

17. The computer-readable medium of claim 10, wherein said QoS setting is based on a network default setting if said QoS setting request is not received from said customer.

18. The computer-readable medium of claim 10, wherein said customer premise equipment comprises at least one of: a Terminal Adaptor (TA), a customer gateway, or a customer router.

19. An apparatus for providing a customer configurable Quality of Service (QoS) setting of customer premise based equipment in a communication network, comprising:
means for receiving a QoS setting request from a customer to modify a QoS setting for the customer premise based equipment, where said modifying creates a modified QoS setting; and
means for prioritizing a voice related traffic according to said modified QoS setting configured by said customer.

20. The apparatus of claim 19, wherein said modified QoS setting provides at least one of: providing said voice related traffic with a higher queueing priority than data traffic, providing said voice related traffic with a lower queueing priority than said data traffic, or providing said voice related traffic equal to a queueing priority of said data traffic.
